# EUROPEAN PATENT SPECIFICATION

(11) **EP 3 289 865 B1**
(45) Date of publication and mention of the grant of the patent: **21.07.2021**
(21) Application number: 16290163.1
(22) Date of filing: 29.08.2016
(51) Int. Cl.: A01K 61/70, E02B 3/04, A01K 61/77

(54) **PROCESS FOR PRODUCING A CONCRETE STRUCTURE FOR MARINE OR RIVER APPLICATIONS**
VERFAHREN ZUR HERSTELLUNG EINER BETONSTRUKTUR FÜR MEERES- ODER FLUSSANWENDUNGEN
PROCÉDÉ DE PRODUCTION D'UNE STRUCTURE EN BÉTON POUR DES APPLICATIONS MARINES OU FLUVIALES

(43) Date of publication of application: 07.03.2018
(73) Proprietor: Holcim Technology Ltd, 8645 Jona (CH)
(72) Inventor: Dubois-Brugger, Isabelle, 69680 Chassieu (FR); Duchand, Sylvain, 38291 Saint Quentin Fallavier (FR); Horgnies, Matthieu, 38460 Crémieu (FR); Morin, Vincent, 38291 Saint Quentin Fallavier (FR); Delarrard, François, 38291 Saint Quentin Fallavier (FR); Lecomte, Gilles, 38291 Saint Quentin Fallavier (FR)
(74) Representative: Keschmann, Marc

(56) References cited:
- EP-A1- 0 134 855
- JP-A- 2006 081 501

## Description

The invention refers to a process for producing a concrete structure for marine or river applications.

In EP 0 134 855 A1 and JP 2006 081501 A processes for producing concrete structures for marine or river applications are disclosed.

When concrete is used for marine or river infrastructures, it needs to satisfy specific requirements, such as density, good durability in aggressive environments, and high mechanical strength. The conventional concrete mix designs used to fulfil these requirements result in structures that have a dense microstructure, a smooth surface, and a low porosity.

Nowadays, there is a strong tendency to take into account ecological aspects in the development of a new marine or river infrastructure. This new market related to "eco-engineering" aims at developing technical infrastructures that will have a positive impact on the marine or river environment. This positive impact refers to the promotion of biodiversity and thus of the micro-macro algae and fish population growth. One well-known way to promote marine biodiversity is the construction and installation of artificial reefs.

Artificial structures generally lack the environmental heterogeneity and surface roughness that is usually present on natural rocky shores, enabling them to support greater numbers of individuals and species. Thus, the fast and durable colonization of marine or river structures by aquatic life requires that the concrete structures have sufficient surface roughness. The colonization and growth of aquatic life is also promoted by higher levels of open-porosity at the surface of the structures and by using concrete compositions that do not have a too high pH and that do not have a high level of leaching of compounds. It is therefore clear that conventional concrete elements used in traditional marine or river infrastructures are not compatible with the development of a rich and diverse aquatic fauna and flora.

It has already been suggested to add organic bioactive agents, such as wood, and nutriments to the concrete mixture, in order to enhance the growth of aquatic life. Further, it is known to use marine by-products, in particular marine by-products based on limestone, or aggregates (shells, coral, etc.) as an addition to the concrete mixture or as an application to the surface of the concrete structure.

However, the drawback of these solutions is that an extra component has to be added to the concrete, which results in increased costs and higher logistic efforts due to the difficulties to supply these additions on a regular basis and with similar compositions and worldwide availability. Further, such additions might negatively affect the durability of the concrete structure.

Thus, the purpose of this invention is to provide a concrete structure and composition that satisfy all structural requirements in terms of durability, strength and density in marine or river environment, and also enhance and facilitate the colonization of the concrete surface with aquatic life, once the structures are partially or completely immersed.

In order to solve these and other objects, the invention provides processes for producing a concrete structure for marine and river applications as defined in claims 1 and 4, said structure comprising a first, preferably outer, layer of a highly porous concrete and a second layer, which preferably forms an inner core, integrally formed with or bonded to the first layer, said first layer being made of low-porous or dense seawater-resistant or river resistant concrete.

By providing a two layer concrete structure, the first layer may be designed to provide optimized conditions for the colonization and growth of aquatic life. Such conditions are realized by using a highly porous concrete for forming the first layer of the concrete structure. The resulting structure therefore has a high degree of open-porosity, wherein the porous concrete of the first layer has a void content of > 15 vol.%, preferably > 20 vol.%, more preferably > 25 vol.%. The first layer also has a high surface roughness. The second layer, in contrast is made of a low-porous or dense concrete that is resistant to seawater and river environment. The invention therefore does not negatively affect the durability and the strength of the concrete structure, which are mainly provided by the second layer. The void content of the low-porous or dense concrete of the second layer is significantly lower than that of the first layer. According to the invention, the void content of the second layer is < 50 %, preferably < 25%, more preferably < 10%, of the void content of the first layer.

In order to provide sufficient strength to the concrete structure, the thickness of the first layer preferably corresponds to < 1/4 of the thickness of the second layer.

The two layers of the concrete structure are integrally formed with or bonded together, which means that they together form a unitary block of concrete.

The invention does not exclude the presence of further layers in the concrete structure. In a preferred embodiment, however, the concrete structure is comprised of only said first and said second layer.

Generally, concrete is made from a mixture comprising cement, aggregates and water, wherein the cement mass constitutes the binder that bonds together the aggregates once the concrete has cured. Usually both, fine aggregates as well as coarse aggregates, are used, wherein the fine aggregates, such as sand, together with cement forms mortar, which fills the gaps between the coarse aggregate particles. Fine aggregates are defined as aggregate particles that have a particle size of < 4 mm. In contrast, coarse aggregates are defined as aggregate particles that have a particle size of > 4 mm.

The porous concrete of the first layer is preferably made without using coarse aggregates, but only using fine aggregates, in particular sand aggregates, with a narrow particle size distribution of 2-4 mm or 1-3 mm, and without any ultrafine particles being used that can fill the porosity except cement, in order to obtain a fine pore size that will be suitable to catch and protect aquatic life and thus promote its growth. The cement paste coats the fine aggregates and leaves voids between the individual coated particles of the fine aggregates. In this regard, a preferred embodiment of the invention provides that the porous concrete of the first layer comprises sand aggregates that are bonded together by a hydraulic binder, in particular a pure or blended Portland cement.

With regard to the second layer, in a first embodiment the components are identical to those of the first layer, but with a higher amount of cement paste that will fill the porosity between sand aggregates. In a second embodiment, the second layer is made from a concrete made with coarse aggregates that may have a wider particle size distribution, in particular comprising a particle size between 1 mm and 25 mm and sand aggregates and cement. In order to withstand the ambient conditions present in seawater, a suitable concrete is preferably used, wherein the concrete preferably corresponds to the exposure class XS as defined in European Standard EN 206-1

As to the cement used for the second layer and/or the first layer, some other cements such as alumina cement, calcium sulphoaluminate cement and belite calcium sulphoaluminate cement can also be used in particular cases with the advantage to provide low pH surface of the concrete.

The inventive concrete structure may be obtained by different methods. According to a first method of the invention the process for producing the concrete structure comprises
a) preparing a fresh concrete mixture, said concrete mixture comprising cement, sand aggregates and water,
b) pouring the fresh concrete mixture into a mould,
c) allowing a portion of the cement paste to segregate from an upper region to a lower region of the mould, thereby forming the first layer in the upper part (porous layer) and the second layer in the lower part (dense layer),
d) allowing the concrete to set and cure and
e) demoulding the concrete structure.

Thus, the two layers of the concrete structure can be obtained in a single step. The fresh concrete used in this method is of the type suitable for obtaining a porous concrete and therefore comprises a specific and narrow particle size distribution of sand between 1.6 to 3 mm or 2 to a maximum 4 mm without any ultrafine particles that can fill the porosity except cement. Preferably, a fresh concrete mixture is prepared, that has a lower amount of cement paste than is required to fill the total porosity and which is allowed to segregate as describe above to form an upper porous layer and a lower dense layer.
Preferably, said segregation step is carried out by gravity, optionally assisted by vibrating the concrete mix in the mould.

According to a second method of the invention the process for producing the concrete structure comprises:
a) preparing a first fresh concrete mixture, said concrete mixture comprising cement, sand aggregates and water,
b) pouring the first fresh concrete mixture into a formwork,
c) allowing the concrete to set and cure so as to obtain said first layer of porous concrete,
d) relocating one wall of the formwork so as to enlarge the same,
d) preparing a second fresh concrete mixture, said concrete mixture comprising cement, sand and coarse aggregates and water,
e) pouring the second fresh concrete mixture into the enlarged formwork between the first layer and the relocated wall of the formwork,
f) allowing the concrete to set and cure so as to obtain said second layer of non-porous concrete.

Thus, the two layers of the concrete structure are obtained in two separate consecutive steps.

The concrete structure as described above may be used for marine applications in contact with sea water or river applications.

The concrete structure is preferably used for building harbour infrastructures, artificial reefs, foundations of off-shore windmills, breakwater, breakwater pre-casted blocks (accropodes), piers, jetties, underwater pipes, seawalls, or riverbank stabilization.

The invention will now be described in more detail with reference to the following examples.

### Example 1

A fresh mortar mass was mixed containing the following components:

| | Kg |
|---|---|
| Sand 2mm / 4mm | 1649.7 |
| CEM I 52.5 N CE CP2 NF (Lafarge, Plant Saint Pierre La cour) | 430.0 |
| Super plasticizer ADVA Flow 450 (W. R. Grace & Co.) | 4.30 |
| Water | 185.0 |

The fresh concrete according to the above formulation has been obtained by means of a ZYCLOS type mixer. The whole operation has been carried out at 20°C. The method of preparation comprises the following steps:
- At T = 0 seconds: charging the cement and the sand in the bowl mixer and mixing during 7 minutes (15 rpm);
- At T = 7 minutes: adding water and half of the weight of additive and mix for 1 minute (15 rpm);
- At T = 8 minutes: adding the rest of the additive and mix for 1 minute (15 rpm);
- At T = 9 minutes: mixing for 8 minutes (50 rpm); and
- At T = 17 minutes: mixing for 1 minute (15 rpm);
- At T = 18 minutes: pouring the concrete on the level into a mould.

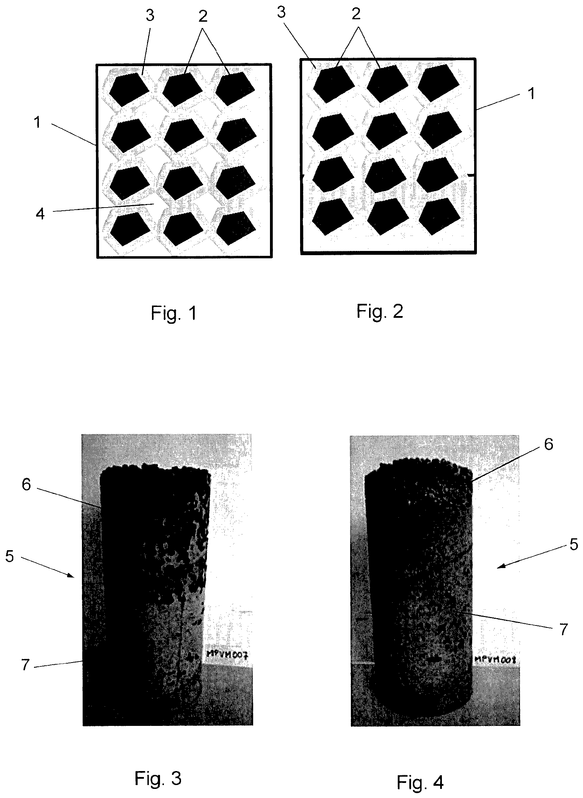

The fresh concrete mix was poured into a cylindrical mould. Subsequently the mould was subjected to vibrations, so that segregation occurred, wherein a portion of the cement paste segregated from an upper region to a lower region of the mould, thereby forming the first layer in the upper part and the second layer in the lower part. The segregation process is schematically shown in Figs. 1 and 2. Fig. 1 shows the mould 1 containing the fresh concrete, which comprises sand 2 that are coated by the cement paste 3. After segregation, a portion of the cement paste 3 has moved to the lower part of the mould 1 and has filled the voids 4 that previously were present between the individual particles of the sand 2, thereby forming a dense, non-porous concrete in the lower part of the mould.

After having hardened, the cylindrical concrete block 5 was demoulded as shown in Fig. 3, wherein a first layer 6 of porous concrete and a second layer 7 of dense, low-porous concrete has been formed.

### Example 2

Example 2 corresponds to example 1, except that a different concrete mix was used. A fresh concrete mass was mixed containing the following components:

| | Kg |
|---|---|
| Sand 1,6mm / 3mm | 1490 |
| CEM I 52.5 N CE CP2 NF (Lafarge, Plant Saint Pierre La cour) | 390 |
| Super plasticizer ADVA Flow 450 (W. R. Grace & Co.) | 4.50 |
| Water | 162.0 |

The fresh concrete according to the above formulation has been obtained by means of a ZYCLOS type mixer. The whole operation has been carried out at 20°C. The method of preparation comprises the following steps:
- At T = 0 seconds: charging the cement and the sand in the bowl mixer and mixing during 7 minutes (15 rpm);
- At T = 7 minutes: adding water and half of the weight of additive and mix for 1 minute (15 rpm);
- At T = 8 minutes: adding the rest of the additive and mix for 1 minute (15 rpm);
- At T = 9 minutes: mixing for 8 minutes (50 rpm); and
- At T = 17 minutes: mixing for 1 minute (15 rpm);
- At T = 18 minutes: pouring the concrete on the level into a mould.

The fresh concrete mix was again poured into a cylindrical mould. Subsequently the mould was subjected to vibrations, so that segregation occurred, with the effects shown in Figs. 1 and 2.

After having hardened, the cylindrical concrete block 5 was demoulded as shown in Fig. 4, wherein a first layer 6 of porous concrete and a second layer 7 of dense, low-porous concrete has been formed.

### Example 3

A first fresh concrete mass was mixed containing the following components:

| | Kg |
|---|---|
| Sand 1,6mm / 3mm | 1649.7 |
| CEM I 52.5 N CE CP2 NF (Lafarge, Plant Saint Pierre La cour) | 260.0 |
| Super plasticizer ADVA Flow 450 (W. R. Grace & Co.) | 2.60 |
| Water | 112.0 |

A second fresh concrete mass was mixed containing the following components:

| | Source | kg per m³ |
|---|---|---|
| Cement | Val d'Aergues - CEM I 52.5 N CE PM-ES-CP2 NF | 350.0 |
| Sand | Carrière de Cassis - 0/1.6 grinded | 591.0 |
| Gravel | Carrière de Cassis - 1.6/3 grinded | 266.0 |
| Gravel | Carrière de Cassis - 3/6 grinded | 56,0 |
| Gravel | Carrière de Cassis - 6/11 grinded | 454.0 |
| Gravel | Carrière de Cassis - 11/22 grinded | 526.0 |
| Super-plastizicer | Chryso - CHRYSOFluid Optima 206 | 3.85 |
| Water | | 168.0 |

In the above table, "Carrière de Cassis" means that the gravel originates from a quarry operated by the company Lafarge situated in Cassis, a commune situated east of Marseille in the department of Bouches-du-Rhône in the Provence-Alpes-Côte d'Azur region in southern France. The numbers "11/22" mean that the respective portion of aggregates consists of particles having a particle size of between 11 and 22mm.

The fresh mixture according to the above formulation has been obtained by means of a ZYCLOS type mixer. The whole operation has been carried out at 20°C. The method of preparation comprises the following steps:
- At T = 0 seconds: charging the cement, the sand and the gravels in the bowl mixer and mixing during 7 minutes (15 rpm);
- At T = 7 minutes: adding water and half of the weight of additive and mix for 1 minute (15 rpm);
- At T = 8 minutes: adding the rest of the additive and mix for 1 minute (15 rpm);
- At T = 9 minutes: mixing for 8 minutes (50 rpm); and
- At T = 17 minutes: mixing for 1 minute (15 rpm);
- At T = 18 minutes: pouring the concrete on the level into a mould.

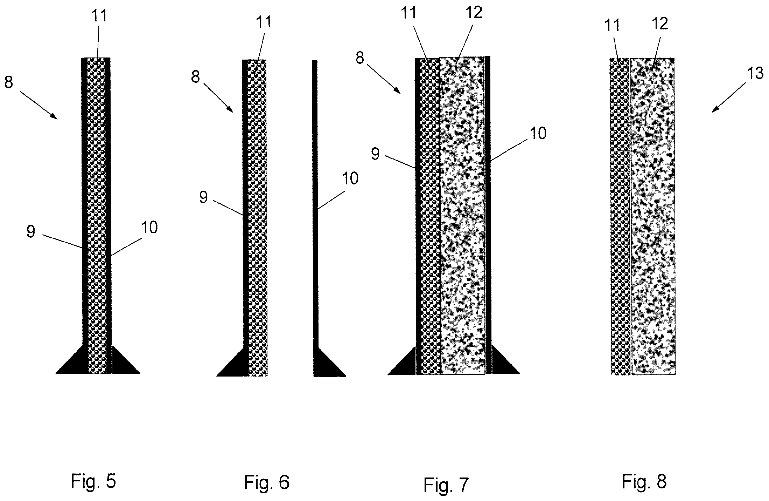

A formwork 8 was used as shown in Fig. 5 comprising a left formwork wall 9 and a right formwork wall 10. The first fresh concrete mass was poured into the formwork in order to produce a first concrete layer 11 made of porous concrete. Thereafter, the right formwork wall 10 was relocated so as to enlarge the space within the formwork (Fig. 6). The second fresh concrete mass was poured into the enlarged formwork 8 between the first layer 11 and the relocated wall 10 of the formwork in order to produce a second concrete layer 12 made of dense, low-porous concrete (Fig. 7). The two-layer concrete block 13 resulting after demoulding is shown in Fig. 8.

## Claims

1. A process for producing a concrete structure for marine or river applications, said concrete structure comprising a first, preferably outer, layer of highly porous concrete and a second layer, which preferably forms an inner core, integrally formed with or bonded to the first layer, said second layer being made of low-porous or dense seawater-resistant or river resistant concrete, the process comprising
a) preparing a fresh concrete mixture, said concrete mixture comprising cement, sand aggregates and water,
b) pouring the fresh concrete mixture into a mould (1),
c) allowing a portion of the cement paste (3) to segregate from an upper region to a lower region of the mould (1), thereby forming the first layer (6) in the upper part and the second layer (7) in the lower part,
d) allowing the concrete to set and cure and
e) demoulding the concrete structure,
wherein the porous concrete of the first layer has a void content of > 15 vol.%, preferably > 20 vol.%, more preferably > 25 vol.% and the void content of the second layer is < 50 %, preferably < 25%, more preferably < 10%, of the void content of the first layer.

2. A process according to claim 1, wherein said segregation step is carried out by gravity, optionally assisted by vibrating the concrete mix in the mould (1).

3. A process according to claim 1 or 2, wherein the concrete structure, after step e), is immersed partially or completely in seawater or river.

4. A process for producing a concrete structure for marine or river applications, said concrete structure comprising a first, preferably outer, layer of highly porous concrete and a second layer, which preferably forms an inner core, integrally formed with or bonded to the first layer, said second layer being made of low-porous or dense seawater-resistant or river resistant concrete, the process comprising
a) preparing a first fresh concrete mixture, said concrete mixture comprising cement, sand aggregates and water,
b) pouring the first fresh concrete mixture into a formwork (8),
c) allowing the concrete to set and cure so as to obtain said first layer (11) of porous concrete,
d) relocating one wall (10) of the formwork (8) so as to enlarge the same,
d) preparing a second fresh concrete mixture, said concrete mixture comprising cement, aggregates and water,
e) pouring the second fresh concrete mixture into the enlarged formwork (8) between the first layer (11) and the relocated wall (10) of the formwork (8),
f) allowing the concrete to set and cure so as to obtain said second layer (12) of non-porous concrete, wherein the porous concrete of the first layer has a void content of > 15 vol.%, preferably > 20 vol.%, more preferably > 25 vol.% and the void content of the second layer is < 50 %, preferably < 25%, more preferably < 10%, of the void content of the first layer.

5. A process according to any one of claims 1 to 4, wherein the porous concrete of the first layer comprises fine aggregates, such as sand aggregates, having a narrow particle size distribution of 2-4 mm or 1-3 mm, with no coarse aggregates nor ultrafine particles being present.

6. A process according to claim 5, wherein the fine aggregates have a maximum particle size of 4 mm.

7. A process according to claim 5 or 6, wherein the fine aggregates have a minimum particle size of 1mm.

8. A process according to any one of claims 1 to 7, wherein the thickness of the first layer corresponds to < 1/4 of the thickness of the second layer.

9. A process according to any one of claims 1 to 8, wherein the second layer comprises coarse aggregates having a particle size between 4 mm and 25 mm and sand aggregates having a particle of size below 4mm.

10. A process according to any one of claims 1 to 9, wherein the concrete of the second layer and/or the concrete of the first layer is made from CEM I, II, III, or V cements of the class PM or PM-ES or PM-ES-CP2 as defined in European (French) standard NF P 15-317.

## Patentansprüche

1. Verfahren zur Herstellung einer Betonstruktur für Meeres- oder Flussanwendungen, umfassend eine erste, vorzugsweise äußere Schicht aus hochporösem Beton und eine zweite Schicht, die vorzugsweise einen inneren Kern bildet, die einstückig mit der ersten Schicht gebildet oder mit dieser verbunden ist, wobei die zweite Schicht aus niedrigporigem oder dichtem, meerwasserbeständigen oder flusswasserbeständigen Beton hergestellt ist, wobei das Verfahren umfasst
a) Herstellen einer Frischbetonmischung, wobei die Betonmischung Zement, Sandzuschlagstoffe und Wasser umfasst;
b) Gießen der Frischbetonmischung in eine Form (1),
c) Ermöglichen, dass sich ein Teil der Zementpaste (3) von einem oberen Bereich in einen unteren Bereich der Form (1) entmischt, wodurch die erste Schicht (6) im oberen Teil und die zweite Schicht (7) im unteren Teil gebildet werden,
d) Abbinden- und Aushärtenlassen des Betons und
e) Entformen der Betonstruktur,
wobei der poröse Beton der ersten Schicht einen Hohlraumgehalt von > 15 Vol.-%, vorzugsweise > 20 Vol.-%, bevorzugter > 25 Vol.-% aufweist und der Hohlraumgehalt der zweiten Schicht < 50%, vorzugsweise < 25%, bevorzugter < 10% des Hohlraumgehalts der ersten Schicht beträgt.

2. Verfahren nach Anspruch 1, wobei der Entmischungsschritt durch Schwerkraft ausgeführt wird, gegebenenfalls unterstützt durch Vibrieren der Betonmischung in der Form (1).

3. Verfahren nach Anspruch 1 oder 2, wobei die Betonstruktur nach Schritt e) teilweise oder vollständig in Meer- oder Flusswasser eingetaucht wird.

4. Verfahren zur Herstellung einer Betonstruktur für Meeres- oder Flussanwendungen, umfassend eine erste, vorzugsweise äußere Schicht aus hochporösem Beton und eine zweite Schicht, die vorzugsweise einen inneren Kern bildet, die einstückig mit der ersten Schicht gebildet oder mit dieser verbunden ist, wobei die zweite Schicht aus niedrigporigem oder dichtem, meerwasserbeständigen oder flusswasserbeständigen Beton hergestellt ist, wobei das Verfahren umfasst
a) Herstellen einer ersten Frischbetonmischung, wobei die Betonmischung Zement, Sandzuschlagstoffe und Wasser umfasst;
b) Gießen der ersten Frischbetonmischung in eine Schalung (8),
c) Ermöglichen, dass der Beton abbindet und aushärtet, um die erste Schicht (11) aus porösem Beton zu erhalten,
d) Verschieben einer Wand (10) der Schalung (8), um diese zu vergrößern,
d) Herstellen einer zweiten Frischbetonmischung, wobei die Betonmischung Zement, Zuschlagstoffe und Wasser umfasst;
e) Gießen der zweiten Frischbetonmischung in die vergrößerte Schalung (8) zwischen der ersten Schicht (11) und der verschobenen Wand (10) der Schalung (8),
f) Ermöglichen, dass der Beton abbindet und aushärtet, um die zweite Schicht (12) aus nicht porösem Beton zu erhalten, wobei der poröse Beton der ersten Schicht einen Hohlraumgehalt von > 15 Vol.-%, vorzugsweise > 20 Vol.-%, bevorzugter > 25 Vol.-% aufweist und der Hohlraumgehalt der zweiten Schicht < 50%, vorzugsweise < 25%, bevorzugter < 10% des Hohlraumgehalts der ersten Schicht beträgt.

5. Verfahren nach einem der Ansprüche 1 bis 4, wobei der poröse Beton der ersten Schicht feine Zuschlagstoffe, wie Sandzuschlagstoffe, mit einer engen Teilchengrößenverteilung von 2 bis 4 mm oder 1 bis 3 mm umfasst, ohne dass grobe Zuschlagstoffe oder ultrafeine Partikel vorhanden sind.

6. Verfahren nach Anspruch 5, wobei die feinen Zuschlagstoffe eine maximale Partikelgröße von 4 mm aufweisen.

7. Verfahren nach Anspruch 5 oder 6, wobei die feinen Zuschlagstoffe eine mindeste Partikelgröße von 1 mm aufweisen.

8. Verfahren nach einem der Ansprüche 1 bis 7, wobei die Dicke der ersten Schicht < 1/4 der Dicke der zweiten Schicht entspricht.

9. Verfahren nach einem der Ansprüche 1 bis 8, wobei die zweite Schicht grobe Zuschlagstoffe mit einer Partikelgröße zwischen 4 mm und 25 mm und Sandzuschlagsstoffe mit einer Partikelgröße von unter 4 mm umfasst.

10. Verfahren nach einem der Ansprüche 1 bis 9, wobei der Beton der zweiten Schicht und/oder der Beton der ersten Schicht aus CEM I-, II-, III- oder V-Zementen der Klasse PM oder PM-ES oder PM-ES-CP2 gemäß der europäischen (französischen) Norm NF P 15-317 hergestellt ist.

## Revendications

1. Procédé de production d'une structure en béton pour des applications marines ou fluviales, ladite structure en béton comprenant une première couche, de préférence externe, de béton hautement poreux et une seconde couche, qui forme de préférence un noyau interne, formée intégralement avec ou liée à la première couche, ladite seconde couche étant constituée de béton peu poreux ou dense résistant à l'eau de mer ou aux eaux fluviales, le procédé comprenant
a) préparer un mélange de béton frais, ledit mélange de béton comprenant du ciment, des agrégats sableux et de l'eau,
b) verser le mélange de béton frais dans un moule (1),
c) laisser une partie du mortier (3) se ségréger depuis une région supérieure vers une région inférieure du moule (1), formant ainsi la première couche (6) dans la partie supérieure et la seconde couche (7) dans la partie inférieure,
d) laisser le béton se poser et durcir et
e) démouler la structure en béton,
dans lequel le béton poreux de la première couche a une teneur en vide de > 15 % en volume, de préférence > 20 % en volume, plus préférablement > 25, % en volume et la teneur en vide de la seconde couche est < 50 %, de préférence < 25 %, plus préférablement < 10 %, de la teneur en vide de la première couche.

2. Procédé selon la revendication 1, dans lequel ladite étape de ségrégation est réalisée par gravité, éventuellement assistée par la vibration du mélange de béton dans le moule (1).

3. Procédé selon la revendication 1 ou 2, dans lequel la structure en béton, après l'étape e), est immergée partiellement ou complètement dans de l'eau de mer ou de rivière.

4. Procédé de production d'une structure en béton pour des applications marines ou fluviales, ladite structure en béton comprenant une première couche, de préférence externe, de béton hautement poreux et une seconde couche, qui forme de préférence un noyau interne, formée intégralement avec ou liée à la première couche, ladite seconde couche étant constituée d'un béton peu poreux ou dense résistant à l'eau de mer ou aux eaux fluviales, le procédé comprenant
a) préparer un premier mélange de béton frais, ledit mélange de béton comprenant du ciment, des agrégats sableux et de l'eau,
b) verser le premier mélange de béton frais dans un coffrage (8)
c) laisser le béton poser et durcir de manière à obtenir ladite première couche (11) de béton poreux,
d) repositionner une paroi (10) du coffrage (8) de manière à l'agrandir,
d) préparer un second mélange de béton frais, ledit mélange de béton comprenant du ciment, des agrégats et de l'eau,
e) verser le second mélange de béton frais dans le coffrage élargi (8) entre la première couche (11) et la paroi repositionnée (10) du coffrage (8),
f) laisser le béton poser et durcir de manière à obtenir ladite seconde couche (12) de béton non poreux,
dans lequel le béton poreux de la première couche a une teneur en vide de > 15 % en volume, de préférence > 20 % en volume, plus préférablement > 25 % en volume et la teneur en vides de la seconde couche est < 50 %, de préférence < 25 %, plus préférablement < 10 %, de la teneur en vide de la première couche.

5. Procédé selon l'une quelconque des revendications 1 à 4,
dans lequel le béton poreux de la première couche comprend des agrégats fins, tels que des agrégats sableux, ayant une distribution granulométrique étroite de 2 à 4 mm ou 1 à 3 mm, sans présence d'agrégats grossiers ni de particule ultrafine.

6. Procédé selon la revendication 5, dans lequel les agrégats fins ont une taille de particule maximale de 4 mm.

7. Procédé selon la revendication 5 ou 6, dans lequel les agrégats fins ont une taille de particule minimale de 1 mm.

8. Procédé selon l'une quelconque des revendications 1 à 7,
dans lequel l'épaisseur de la première couche correspond à < 1/4 de l'épaisseur de la seconde couche.

9. Procédé selon l'une quelconque des revendications 1 à 8,
dans lequel la seconde couche comprend des agrégats grossiers ayant une taille de particule comprise entre 4 mm et 25 mm et des agrégats sableux ayant une taille de particule inférieure à 4 mm.

10. Procédé selon l'une quelconque des revendications 1 à 9,
dans lequel le béton de la seconde couche et/ou le béton de la première couche est réalisé à partir de ciments CEM I, II, III ou V de la classe PM ou PM-ES ou PM-ES-CP2 tels que définis dans la norme européenne (française) NF P 15-317.
